Europäisches Patentamt

European Patent Office

Office européen des brevets

(11) Veröffentlichungsnummer: **0 411 463 A1**

## (12) EUROPÄISCHE PATENTANMELDUNG

(21) Anmeldenummer: **90114275.2**

(22) Anmeldetag: **25.07.90**

(51) Int. Cl.⁵: **H04L 25/03**

(30) Priorität: **03.08.89 EP 89114375**

(43) Veröffentlichungstag der Anmeldung:
**06.02.91 Patentblatt 91/06**

(84) Benannte Vertragsstaaten:
**AT BE CH DE DK ES FR GB GR IT LI LU NL SE**

(71) Anmelder: **Siemens Aktiengesellschaft**
**Wittelsbacherplatz 2**
**D-8000 München 2(DE)**

(72) Erfinder: **Hofmann, Ludwig, Dipl.-Ing. FH**
**Carl-Orff-Strasse 20**
**D-8068 Hettenshausen(DE)**

(54) Digitales Übertragungssystem.

(57) Die Erfindung bezieht sich auf ein digitales Übertragungssystem mit zwei Endstellen (Sende/Empfangsstationen) (A, B) und einer Übertragungsstrecke (FF) zwischen den Endstellen (A, B), deren Empfangsteil Einrichtungen zur Entzerrung von Signalverzerrungen der Übertragungsstrecke enthält.

Zur Verbesserung der Übertragungsqualität und Reichweite des Übertragungssystems und Erreichung eines einfachen Aufbaus sieht die erfindungsgemäße Lösung in lediglich einer Endstelle (B) im Empfangsteil eine Einrichtung (AE) zur Entzerrung des Empfangssignals und im Sendeteil (S2) einen Vorverzerrer vor. Der Vorverzerrer (VV) wird durch ein vom Entzerrer (AE) abgeleitetes Signal derart angesteuert, daß das zur Gegenstation (A) gesendete Signal entsprechend der Obertragungsstrecke (FF) vorverzerrt wird. Bei Mobilfunksystemen sind Entzerrer (AE) und Vorverzerrer (VV) in der Feststation angeordnet.

EP 0 411 463 A1

# DIGITALES ÜBERTRAGUNGSSYSTEM

Die Erfindung bezieht sich auf ein digitales Übertragungssystem mit zwei Endstellen (Sende-/Empfangsstationen) und einer Übertragungsstrecke zwischen den Endstellen, deren Empfangsteil Einrichtungen zur Entzerrung von Signalverzerrungen der Übertragungsstrecke enthält.

Bei einem Übertragungssystem treten auf der Übertragungsstrecke, beispielsweise einem Funkfeld, Verzerrungen des Signals durch Mehrwegeausbreitungen auf. Diese Mehrwegeausbreitungen werden in Digitalsystemen empfängerseitig durch einen Equalizer, der das Funkfeld zum Beispiel durch Korrelation mit einer Präambel kennt, kompensiert. Dabei ist jeder Empfänger mit einem in der Regel sehr aufwendigen Equalizer auszurüsten.

Der Erfindung liegt die Aufgabe zugrunde, ein in Zeitmultiplex arbeitendes digitales Übertragungssystem hinsichtlich der Übertragungsqualität und Reichweite zu verbessern und einen einfachen Aufbau zu erreichen.

Diese Aufgabe wird gemäß der Erfindung in der Weise gelöst, daß in lediglich einer Endstelle eine Einrichtung zur Entzerrung des Empfangssignals angeordnet ist, von der eine Information über den Verzerrungsgrad abgeleitet und einem im Sendeteil derselben Endstelle angeordneten Vorverzerrer zugeführt wird und diesen derart ansteuert, daß das zur anderen Endstelle (Gegenstation) gesendete Signal entsprechend der Verzerrung der Übertragungsstrecke vorverzerrt wird.

Eine vorteilhafte Anwendung des erfindungsgemäßen Übertragungssystems ist beim Mobilfunksystem gegeben. Dabei bilden die Feststationen diejenigen Endstellen, deren Empfangsteil mit einer Entzerrungseinrichtung versehen ist und deren Sendeteil einen Vorverzerrer enthält. Die Entzerrer und Vorverzerrer sind also nur bei der vergleichsweise geringen Anzahl von Feststati onen (Basisstationen) erforderlich, bei der demgegenüber großen Zahl von Teilnehmergeräten in den Mobilstationen können derartige Einrichtungen entfallen.

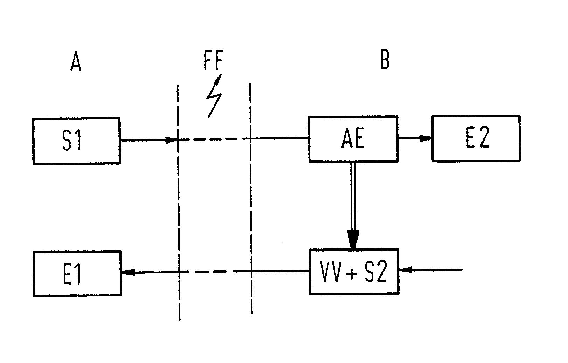

Nachstehend wird die Erfindung anhand eines in der Zeichnung dargestellten Ausführungsbeispiels näher erläutert.

Die Figur zeigt ein Übertragungssystem im Blockschaltbild. Die beiden Endstellen (Stationen) sind mit A und B bezeichnet, deren Sender und Empfänger mit S1, E1 und S2, E2. Zwischen den beiden Endstellen befindet sich ein Funkfeld FF, in dem die Signalverzerrungen entstehen. Der Empfangsteil E2 der Endstelle 8 enthält einen adaptiven Entzerrer AE, in dem das vom Sender S1 der Endstelle A gesendete, im Funkfeld FF verzerrte Signal entzerrt wird. Zugleich wird im adaptiven Entzerrer AE eine Information über die Verzerrung abgeleitet und einem im Sendeteil S2 der Endstelle B angeordneten Vorverzerrer VV zugeführt. Damit wird der Vorverzerrer VV so angesteuert, daß das zur Gegenstation (Endstelle A) gesendete Signal entsprechend der Verzerrung des Funkfeldes FF vorverzerrt wird und so als unverzerrtes Signal zum Empfänger E1 der Endstelle A gelangt.

In Fällen, in denen die Verzerrungen von Station A nach Station B gleich den Verzerrungen in der umgekehrten Richtung sind, kann also das im Entzerrer ermittelte Signal zur Vorverzerrung des Sendesignals verwendet werden. Auf diese Weise wird erreicht, daß der andere Empfänger ein unverzerrtes Signal erhält. Der Empfänger kann dadurch sehr einfach, nämlich ohne Entzerrer, aufgebaut werden. Wesentlich ist dabei natürlich, daß sich die Verzerrungen vom Sendezeitschlitz bis zum Empfangszeitschlitz, in denen die Signalübertragung in der einen bzw. der anderen Richtung erfolgt, fast nicht ändern und in beiden Übertragungsrichtungen im gleichen Frequenzbereich gearbeitet wird.

## Ansprüche

1. Digitales Übertragungssystem mit zwei Endstellen (Sende-/Empfangsstationen) und einer Übertragungsstrecke zwischen den Endstellen, deren Empfangsteil Einrichtungen zur Entzerrung von Signalverzerrungen der Übertragungsstrecke enthält, **dadurch gekennzeichnet,** daß in lediglich einer Endstelle eine Einrichtung zur Entzerrung des Empfangssignals angeordnet sind, von der eine Information über den Verzerrungsgrad abgeleitet und einem im Sendeteil derselben Endstelle angeordneten Vorverzerrer zugeführt wird und diesen derart ansteuert, daß das zur anderen Endstelle (Gegenstation) gesendete Signal entsprechend der Verzerrung der Übertragungsstrecke vorverzerrt wird.

2. Digitales Übertragungssystem nach Anspruch 1, bestehend aus den Fest- und Mobilstationen eines Mobilfunksystems, **dadurch gekennzeichnet,** daß die Feststationen diejenigen Endstellen bilden, deren Empfangsteil mit einer Entzerrungseinrichtung versehen ist und deren Sendeteil einen Vorverzerrer enthält.

Europäisches
Patentamt

**EUROPÄISCHER RECHERCHENBERICHT**

Nummer der Anmeldung

EP 90 11 4275

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | EP-A-0 096 943 (PHILIPS) <br> * Seite 1, Zeilen 1-13; Seite 3, Zeilen 11-25; Seite 6, Zeilen 28-32 * <br> --- | 1 | H 04 L 25/03 |
| A | 37TH IEEE VEHICULAR TECHNOLOGY CONFERENCE, Tampa, Florida, 1.-3. Juni 1987, Seiten 281-285, IEEE, New York, US; A. BATEMAN et al.: "Narrowband coherent data transmission-mobile" <br> * Seite 281, rechte Spalte, Zeilen 5-10,36-43 * <br> ----- | 2 | |

**RECHERCHIERTE SACHGEBIETE (Int. Cl.5)**

H 04 L
H 04 B

Der vorliegende Recherchenbericht wurde für alle Patentansprüche erstellt

| Recherchenort | Abschlußdatum der Recherche | Prüfer |
|---|---|---|
| DEN HAAG | 31-08-1990 | CRETAINE P.A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument